Europäisches Patentamt

European Patent Office

Office européen des brevets

(19)

(11) Veröffentlichungsnummer: **0 149 112**
**A2**

# EUROPÄISCHE PATENTANMELDUNG

(12)

(21) Anmeldenummer: **84114932.1**

(22) Anmeldetag: **07.12.84**

(51) Int. Cl.⁴: **C 08 G 63/68**
**C 10 L 1/22**

(30) Priorität: **15.12.83 DE 3345348**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Anzinger, Hermann, Dr.**
**Jakob-Kneip-Strasse 146**
**D-4000 Düsseldorf 13(DE)**

(72) Erfinder: **Zöllner, Wolfgang**
**Bruhnstrasse 2a**
**D-4000 Düsseldorf 10(DE)**

(72) Erfinder: **Borggrefe, Gerhard, Dr.**
**Weseler Strasse 9**
**D-4000 Düsseldorf 1(DE)**

(54) **Kammartige Polyester, ihre Herstellung und Verwendung.**

(57) Beschrieben werden kammartige Polyester, die durch Umsetzung von Fettsäuredialkanolamiden mit difunktionellen Carbonsäuren herstellbar sind. Die Produkte sind in unpolaren Lösungsmitteln wie Paraffinkohlenwasserstoffen löslich, und können als Fließfähigkeitsverbesserer für Mineralöle eingesetzt werden.

EP 0 149 112 A2

Henkelstraße 67
4000 Düsseldorf, den 12. Dezember 1983

0149112
HENKEL KGaA
ZR-FE/Patente
Dr. Wi/Br

— 1 —

P a t e n t a n m e l d u n g

D 6963 EP

## "Kammartige Polyester, ihre Herstellung und Verwendung"

Die Erfindung betrifft neue Polyester mit einer überwiegend linearen Hauptkette entlang der in regelmäßigen Abständen unverzweigte Alkylgruppen angeordnet sind. Die Produkte sind in apolaren Medien wie Kohlenwasserstoff, insbesondere in Paraffinen löslich.

Für Polyester mit derartig regelmäßigem Molekülaufbau besteht ein Bedarf. Die Produkte können insbesondere als Fließfähigkeitsverbesserer für paraffinhaltige Mineralöle eingesetzt werden.

Fließfähigkeitsverbesserer für Mineralöle werden in steigendem Maße gebraucht, da im Zuge der Verknappung von Mineralölprodukten immer mehr Rohöle verarbeitet werden, die einen hohen Anteil an Paraffinkohlenwasserstoff enthalten. Derartige Öle verlieren ihre Fließfähigkeit bei der Abkühlung von der meist erhöhten Lagertemperatur auf Raumtemperatur durch Auskristallisieren höher schmelzender Bestandteile. Um Schwierigkeiten bei Förderung, Transport und Verarbeitung zu vermeiden, ist es daher üblich, Fließfähigkeitsverbesserer, auch Stockpunkterniedriger oder Kristallisationsinhibitoren genannt, zuzusetzen.

Bisher bekannte Fließfähigkeitsverbesserer sind meist durch radikalische Polymerisation hergestellte Produkte.

...

Es bestand daher ein Bedarf hier einfach und billig zu erzeugende Polyester zur Verfügung zu haben, welche aus einem erheblichen Anteil an natürlichen, nachwachsenden Rohstoffen aufgebaut sind.

Es ist somit Aufgabe der Erfindung neue, kammartige vorzugsweise lineare Polyester mit linearen Seitenketten zu schaffen. Eine weitere Aufgabe der Erfindung liegt darin, einfache Herstellungsmöglichkeiten für derartige Produkte aufzufinden. Schließlich soll die Verwendbarkeit der Polyester als Fließfähigkeitsverbesserer für paraffinhaltige Mineralöle aufgezeigt werden.

Gegenstand der Erfindung sind somit kammartige Polyester, aufgebaut aus Dihydroxyverbindungen und Dicarbonsäuren mit Alkylseitenketten, dadurch gekennzeichnet, daß sie aus

- Fettsäurediethanolamiden mit 8 bis 24 C-Atomen und bis zu drei Doppelbindungen im Fettsäurerest als Dihydroxyverbindungen und
- Alkylbernsteinsäuren mit einem $C_8$ bis $C_{22}$-Alkylrest und gewünschtenfalls einer Doppelbindung als Dicarbonsäuren aufgebaut sind.

Nach einer weiteren Ausführungsform ist die Herstellung der Produkte Gegenstand der Erfindung. Ein weiterer Gegenstand der Erfindung ist die Verwendung der kammartigen Polyester als Fließverbesserer für paraffinhaltige Mineralöle.

Den erfindungsgemäßen kammartigen Polyestern liegen als Dihydroxyverbindungen Fettsäurealkanolamide zugrunde.

...

Fettsäurealkanolamide sind die Amidierungsprodukte natürlich vorkommender Fettsäuren mit Diethanolamin.
Da natürlich vorkommende Fettsäuren zumeist als Gemische vorliegen, ist es bevorzugt, Fettsäuredialkanolamide einzusetzen, die ihrerseits Gemische darstellen.
Geeignete Fettsäuredialkanolamide können die unterschiedlichsten Fettsäurereste aufweisen. So sind Fettsäuredialkanolamide geeignet, die sich von kurzkettigen laurinsäurereichen Fettsäuren mit geringer Jodzahl ableiten, beispielsweise Fettsäurediethanolamide auf Basis Kokosfettsäure oder Palmkernölfettsäure. Weiter geeignet sind Fettsäuredialkanolamide mit einem hohen Anteil an Palmitinsäure zum Beispiel Palmölfettsäurediethanolamid. Geeignet sind insbesondere Fettsäuredialkanolamide auf Basis längerkettiger Fettsäuren zum Beispiel auf Basis Baumwollölfettsäure, Linolsäure, Erdnußölfettsäure oder Sojaölfettsäure. Weiterhin auf Basis Leinölfettsäure, Sonnenblumenölfettsäure oder Talg. Ganz besonders bevorzugt sind Fettsäuredialkanolamide auf Basis von Fettsäuren, die Anteile von vorzugsweise ungesättigten Fettsäuren mit mehr als 18 Kohlenstoffatome enthalten. Derartige Fettsäuren sind beispielsweise Rübölfettsäure, Spermölfettsäure oder Tranfettsäure. Neben Fettsäurediethanolamiden auf Basis der genannten natürlich vorkommenden Fettsäuren können mit Erfolg auch Fettsäurediethanolamide auf Basis von destillierten oder fraktionierten Fettsäuren eingesetzt werden. Weiterhin ist es oftmals bevorzugt, Fettsäurediethanolamide auf Basis gehärteter Fettsäuren zum Beispiel auf Basis gehärteter Talgfettsäure einzusetzen.

...

Fettsäuredialkanolamide werden nach bekannten Verfahren hergestellt. So können zum Beispiel Fettsäuremethylester mit Diethanolamin gewünschtenfalls im Beisein von Katalisatoren und unter Abdestillieren des flüchtigen Alkohols einfach in die Dialkanolamide überführt werden. Aufgrund ihres Herstellungsverfahrens enthalten die Fettsäuredialkanolamide als Nebenprodukt eine geringe Menge an Diethanolaminestern. Die Menge der Estern kann spektroskopisch oder durch Titration von basischem Stickstoff bestimmt werden. Bei der Herstellung der erfindungsgemäßen kammartigen Polyester führen die Ethanolaminester zu Störungen des regelmäßigen Aufbaues. Es ist daher bevorzugt, Fettsäurediethanolamide einzusetzen, die einen Gehalt an titrierbarem Aminstickstoff d.h. an Esterprodukten von weniger als 5 mol %, vorzugsweise von weniger als 3 mol % und insbesondere von weniger als 1 mol % aufweisen.

Als Dicarbonsäurekomponente enthalten die erfindungsgemäßen kammartigen Polyester Alkylbernsteinsäuren. Verwendet werden hier Alkylbernsteinsäuren mit einer Alkylgruppe in 2-Stellung der Bernsteinsäure. Alkylbernsteinsäuren sind ebenfalls leicht zugängliche, einfach herzustellende Rohstoffe. Die Herstellung ist beispielsweise in US 24 11 215 und US 25 61 232 beschrieben. Danach wird Maleinsäureanhydrid bei erhöhten Temperaturen und gewünschtenfalls unter Katalyse mit ᵈ-Olefinen zur Reaktion gebracht. Als Reaktionsprodukte entstehen Alkylbernsteinsäureanhydride, die in der Seitenkette eine Doppelbindung aufweisen. Diese Produkte können gewünschtenfalls nach bekannten Methoden hydriert werden. Sie können weiterhin mit Alkoholen zu den Halbestern umgesetzt werden, oder zu den freien Säuren verseift werden. Für Zwecke der Erfindung ist es bevorzugt, die gesättigten oder ungesättigten Alkyl-

...

bernsteinsäureanhydride als solche einzusetzen.

Als Alkylbernsteinsäureanhydride zur Erzeugung der erfindungsgemäßen kammartigen Polyester sind die Reaktionsprodukte von $\alpha$-Olefinen der Kettenlänge $C_8$ bis $C_{22}$ geeignet. Bevorzugt, da technisch besonders leicht zugänglich, sind die Reaktionsprodukte von $\alpha$-Olefin-Gemischen. Unter diesen Gemischen sind wiederum diejenigen am besten geeignet, die nur $\alpha$-Olefine mit gerader Kohlenstoffzahl enthalten und durch Oligomerisierung von zum Beispiel Ethylen hergestellt worden sind. So können kammartige Polyester aufgebaut werden aus gesättigten wie auch aus ungesättigten Alkylbernstein-säureanhydriden mit einer $C_8/C_{10}$-Alkylkette, einer $C_{12}/C_{14}$-Alkylkette, einer $C_{16}/C_{18}$-Alkylkette oder einer $C_{18}/C_{20}$ beziehungsweise $C_{20}/C_{22}$-Alkylkette. Auch Gemische derartiger Produkte können eingesetzt werden.

Für eine Reihe von Einsatzzwecken, bei denen ein möglichst apolares Verhalten der kammartigen Polyester und damit gute Löslichkeit in zum Beispiel Kohlenwasserstoffen verlangt wird, etwa bei der Anwendung als Fließfähigkeitsverbesserer für Mineralöle werden kammartige Polyester mit möglichst langen linearen Seitenketten bevorzugt. Derartige Polyester können aufgebaut werden, indem Fettsäuredialkanolamine auf Basis von Fettsäuren mit 16 bis 22 Kohlenstoffatomen mit Alkylbernsteinsäuren zur Reaktion gebracht werden, die als Alkylgruppe einen Substituenten $C_{16}$ bis $C_{22}$ aufweisen. Im Rahmen dieses für Fließfähigkeitsverbesserer bevorzugten Bereiches sind eine Vielzahl von Kombinationen herstellbar. So können zum Beispiel kammartige Polyester aus Talgfett-säurediethanolamide oder Rübölfettsäurediethanolamid und $C_{16}/C_{18}$-Alkylbernsteinsäureanhydrid hergestellt werden.

...

Die erfindungsgemäßen kammartigen Polyester können in Abhängigkeit von der Reinheit der Rohstoffe mit unterschiedlichen Molgewichten hergestellt werden. Im einzelnen gilt hier das Fachwissen der Polymer-Chemie. So wird der Fachmann um hochmolekulare Produkte zu erhalten, sich um eine genaue Äquivalenz zwischen Dicarbonsäureanteilen und Dihydroxyverbindungen bemühen. Um dies zu erreichen, ist es zweckmäßig, die OH-Zahl, Aminzahl beziehungsweise Säurezahl der Ausgangsrohstoffe zu bestimmen und die Produkte in genau äquivalenter Menge einzusetzen. Am Ende der Kondensation kann zur weiteren Erhöhung des Molekulargewichtes eine erneute Bestimmung von Kennzahlen durchgeführt werden und eine äquivalente Menge des verbrauchten Reaktanten nachdosiert werden daß heißt, wenn das Endprodukt eine überschüssige OH-Zahl aufweist, wird Alkylbernsteinsäureanhydrid nachdosiert. Liegt eine überschüssige Säurezahl vor, so wird Fettsäuredialkanolamid nachdosiert.

Zur gezielten Herstellung niedermolekularer Produkte wird mit definierten Überschüssen der Dihydroxyverbindungen oder der Dicarbonsäure gearbeitet. Dabei können Produkte mit Säureendgruppen oder mit OH-Endgruppen hergestellt werden. Als Fließverbesserer für Mineralöle geeignete Produkte weisen osmometrisch bestimmte Zahlenmittel des Molgewichtes zwischen 800 und 15 000, vorzugsweise zwischen 2000 und 8000 und insbesondere zwischen 2000 und 6000 auf.

Zur Herstellung der erfindungsgemäßen kammartigen Polyester können die Fettsäurediethanolamide mit den Alkylbernsteinsäuren oder deren reaktiven Derivaten wie Anhydrid oder Halbester in Gegenwart eines inerten Lösungsmittels, welches mit Wasser ein Azeotrop bildet und gewünschtenfalls in Gegenwart von Katalysatoren verestert werden. So kann die Veresterung in Gegenwart von Toluol oder vorzugsweise Xylol durchgeführt werden,

...

wobei das Reaktionswasser mit dem Lösungsmittel abdestilliert wird und wasserfreies Lösungsmittel rückgeführt wird. Zur Beschleunigung der Veresterungsreaktion können übliche Katalysatoren eingesetzt werden. Geeignete Katalysatoren sind Säuren, wie Toluolsulfonsäure, Oxide wie zum Beispiel Diantimontrioxid oder Zinnoxid, Acetate von Übergangsmetallen wie zum Beispiel Mangan-oder Zinkacetat oder Titansäureester. Je nach dem gewählten Katalysator wird dabei die Veresterungsreaktion zwischen etwa 60 $^{\circ}$ und dem Siedpunkt des Gemisches durchgeführt.

Nach einer weiteren Ausführungsform der Erfindung können die kammartigen Polyester auch lösungsmittelfrei hergestellt werden. Hierzu werden die Fettsäurediethanolamide und die Alkylbernsteinsäuren oder deren Anhydride beziehungsweise Halbester auf Temperaturen zwischen 100 und 220, vorzugsweise zwischen 170 - 210 erhitzt und das entstehende Reaktionswasser beziehungsweise andere flüchtige Komponenten in einem Inertgasstrom zum Beispiel Stickstoff oder Argon ausgetrieben. Auch bei der Herstellung ohne Lösungsmittel können die zuvor genannten Veresterungs- oder Umesterungskatalysatoren mitverwendet werden, wenn dies gewünscht wird.

Die erfindungsgemäßen kammartigen Polyester sind für eine Vielzahl von Anwendungen geeignet. So können sie beispielsweise als Trennmittel bei der Verarbeitung von Thermoplasten, insbesondere bei der Verarbeitung von PVC verwendet werden. Erfindungsgemäße kammartige Polyester auf Basis von Diethanolamiden hoch ungesättigter Fettsäuren, also etwa auf Basis von Leinölfettsäurediethanolamid und ungesättigter Alkylbernsteinsäuren können als lufttrocknende Öle Alkylharzlacken zugesetzt

...

werden. Die Produkte sind weiterhin geeignet zum hydrophobieren von zum Beispiel Leder oder als Weichmacher.

Besondere Eignung zeigen die Produkte als Fließfähigkeitsverbesserer für paraffinhaltige Mineralöle. Dabei erniedrigen sie den Stockpunkt von Lösungen von bei Raumtemperatur festen Paraffinen in Kohlenwasserstoffen und können somit paraffinreichen Rohölen zur Verbesserung der Pumpfähigkeit bei tiefen Temperaturen zur Verminderung der Ablagerungen in Leitungen und Tanks zugesetzt werden. Je nach Paraffingehalt der Rohöle beträgt die zuzusetzende Menge zwischen 20 und 400 ppm. In den meisten Fällen wird eine für die Praxis ausreichende Stockpunkterniedrigung mit Mengen zwischen 50 und 200 ppm erreicht. Beim Einsatz als Fließpunkterniedriger ist es bevorzugt, die kammartigen Polyester als Lösung in einem Kohlenwasserstoff einzusetzen. So können die Produkte beispielsweise als 20 bis 60 %ige Lösung in Xylol oder Toluol verwendet werden.

...

## B e i s p i e l e

1. Herstellung von kammartigen Polyestern:

1 mol eines $C_{16}/C_{18}$-Alkenylbernsteinsäureanhydrid (ca. 30 mol % $C_{16}$; 70 mol %, $C_{18}$) und 1 mol eines Fettsäurediethanolamid mit einem titrierbaren Amingehalt von weniger als 3 mol % wurden in einer Laborapparatur mit Rührer, Gasanleitung, Rückflußkühler und Wasserabscheider eingewogen und mit 1000 ml Xylol versetzt. Es wurde sodann als Katalysator 2,2 g p-Toluolsulfonsäure zugegeben. Der Ansatz wurde zum Sieden erhitzt und 6 Stunden bei dieser Temperatur belassen. Dabei wurde das Reaktionswasser azeotrop ausgekreist. Nach Beendigung der Reaktion konnte der gelöste Polyester entweder so als Fließfähigkeitsverbesserer eingesetzt werden, oder durch Destillation bei Normaldruck beziehungsweise im Vakuum lösungsmittelfrei gewonnen werden. Die Eigenschaften der Reaktionsprodukte sind in der nachfolgenden Tabelle zusammengestellt.

2. Prüfung auf fließverbessernde Wirkung Zur Prüfung auf fließverbessernde Wirkung wurden Lösungen von Paraffin mit einem Erstarrungspunkt von 46 bis 48 $^{\circ}C$ in Benzin der Siedegrenze 145 bis 200 $^{\circ}C$ hergestellt. Der Paraffingehalt betrug 10 beziehungsweise 15 Gewichtsprozent. Die Lösungen wurden mit 100 ppm der kammartigen Polyester versetzt bis zur Erstarrung abgekühlt und beim Auftauen die Temperatur bestimmt, bei der die erstarrte Mischung flüssig wurde. Referenzprodukt war ein marktüblicher Fließfähigkeitsverbesserer.

...

T a b e l l e

| Nr. | Polyester auf Basis eines Fettsäuredi-ethanolamids aus | Säurezahl | OH Zahl | Molekulargewicht Zahlenmittel | Taupunkt 10 %ige | 15 %ige Lösung |
|---|---|---|---|---|---|---|
| 1 | Kokosfettsäure | 2,2 | 4,9 | --- | h.b. | n.b. |
| 2 | Rübölfettsäure, gehärtet | 1,5 | 3,2 | 4300 | $-13°$ | $12°$ |
| 3 | Rübölfettsäure, gehärtet | 0,5 | --- | 3800 | $< -15°$ | $5°$ |
| 4 | Behensäure, technisch | 3,0 | 2,5 | --- | $-10°$ | $10°$ |
| 5 | Leinölfettsäure | 0,8 | 2,2 | 3800 | $3°$ | $13°$ |

Taupunkt ohne Zusatz $5\ °C$ $15\ °C$

Die mit dem Marktprodukt erreichten Werte waren vergleichbar.

0149112 HENKEL KGaA ZR-FE/Patente

Patentansprüche

1. Kammartige Polyester, aufgebaut auf Dihydroxyverbindungen und Dicarbonsäuren mit Alkylseitenketten, dadurch gekennzeichnet, daß sie aus
- Fettsäurediethanolamiden mit 8 bis 24 C-Atomen
und bis zu drei Doppelbindungen im Fettsäurerest
als Dihydroxyverbindungen und
- Alkylbernsteinsäuren mit einem $C_8$ bis $C_{22}$-Alkyl-
rest und gewünschtenfalls einer Doppelbindung
als Dicarbonsäuren
aufgebaut sind.

2. Kammartige Polyester nach Anspruch 1, dadurch gekennzeichnet, daß sowohl die dem Diethanolamid
zugrundeliegende Fettsäure als auch der Alkylrest
der Alkylbernsteinsäure 16 bis 22 C-Atome aufweisen.

3. Kammartige Polyester nach den Ansprüchen 1 und 2,
dadurch gekennzeichnet, daß das dampfdruckosmometrisch bestimmte Zahlenmittel des Molekulargewichts
zwischen 800 und 15000, vorzugsweise zwischen
2000 und 6000 liegt.

4. Kammartige Polyester nach den Ansprüchen 1 bis 3,
dadurch gekennzeichnet, daß die bei ihrer Herstellung eingesetzten Fettsäurediethanolamide einen
durch Titration bestimmbaren Gehalt an freien Aminen
von weniger als 5 Mol %, vorzugsweise weniger als
3 Mol % und insbesondere weniger als 1 Mol % aufweisen.

5. Herstellung der kammartigen Polyester nach den
Ansprüchen 1 bis 4, dadurch gekennzeichnet, daß
die Fettsäurediethanolamide mit den Alkylbernsteinsäuren oder vorzugsweise ihren Anhydriden in Gegen-

...

wart üblicher Katalysatoren verestert werden, wobei das Reaktionswasser als Azeotrop mit einem inerten Lösungsmittel, vorzugsweise Xylol ausgetragen wird.

6. Herstellung der kammartigen Polyester nach den Ansprüchen 1 bis 4, dadurch gekennzeichnet, daß die Fettsäurediethanolamide und die Alkylbernsteinsäuren oder ihre Anhydride in Gegenwart üblicher Katalysatoren der Schmelzkondensation unterworfen werden, wobei das Reaktionswasser im Inertgasstrom ausgetragen werden kann.

7. Verwendung der kammartigen Polyester nach den Ansprüchen 1 bis 4 als Fließverbesserer für paraffinhaltige Mineralöle.